# EUROPEAN PATENT APPLICATION

(11) **EP 4 382 638 A1**
(43) Date of publication of application: **12.06.2024**
(21) Application number: 21952771.0
(22) Date of filing: 04.08.2021
(51) Int. Cl.: C25B 9/00, C25B 1/04, C25B 9/70, C25B 15/021, C25B 15/023, C25B 15/025, C25B 15/027, C25B 15/08

(54) **WATER ELECTROLYSIS SYSTEM AND METHOD FOR CONTROLLING SAME**

(71) Applicant: Hitachi, Ltd., Tokyo 100-8280 (JP)
(72) Inventor: MIZUKAMI Takaaki, Tokyo 100-8280 (JP); SUGIMASA Masatoshi, Tokyo 100-8280 (JP)
(74) Representative: Mewburn Ellis LLP
(86) International application number: PCT/JP2021/029003
(87) International publication number: WO 2023/012945

(57) **Abstract**

This water electrolysis system 100 includes: a plurality of electrolysis stacks 101 connected in series to a direct-current power supply; a hydrogen gas tank 102 that stores hydrogen gas 104 (hydrogen) generated in the electrolysis stacks 101; an oxygen gas tank 103 that stores oxygen gas 105 (oxygen) generated in the electrolysis stacks 101; a hydrogen gas tank pressure control valve 113 that controls the pressure of the hydrogen gas 104 generated in all of the plurality of electrolysis stacks 101; an oxygen gas tank pressure control valve 114 that controls the pressure of the oxygen gas 105 generated in all of the plurality of electrolysis stacks 101; an electrolysis stack hydrogen gas pressure control valve 115 that controls the pressure of the hydrogen gas 104 generated in each of the electrolysis stacks 101; an electrolysis stack oxygen gas pressure control valve 116 that controls the pressure of the oxygen gas 105 generated in each of the electrolysis stacks 101; and a control device that controls opening and closing of the valves.

## Description

### Technical Field

The present invention relates to a water electrolysis system and a method for controlling the same. The present invention relates to: a water electrolysis system in which multiple electrolysis stacks in the system are connected in series and parallel, the water electrolysis system including a storage tank that stores hydrogen and oxygen generated in all of the electrolysis stacks connected in series to a direct-current power supply, and a valve that controls pressure, and further including valves that control pressure in pipes of hydrogen and oxygen of water connected to the individual electrolysis stacks, wherein control valves installed in the individual electrolysis stacks have a function of adjusting hydrogen and oxygen generated in the individual electrolysis stacks to a predetermined pressure; and an operation method thereof.

### Background Art

As compared to fossil fuels, hydrogen is clean energy that does not emit carbon dioxide during combustion. Therefore, hydrogen has gained attention as one of clean energy for global warming countermeasures, and technologies related to production, transportation, and utilization of hydrogen has been developed.

Regarding an apparatus for producing hydrogen on a large scale by electrolysis of water using renewable energy or the like and a method for controlling the apparatus, NPL 1 indicates that a novel semiconductor device for large-scale water electrolysis system is in progress from the viewpoint of stability of power quality and reduction in installation area.

NPL 2 indicates that a large-scale water electrolysis system exceeding 20 MW needs to operate a large number of electrolysis stacks with one power supply for making the power supply operate more efficiently. In addition, NPL 1 discloses a method for controlling ON/OFF of operation in units of strings (series units) and ON/OFF of operation of each stack in a string in order to follow a maximum power point (MPP) of renewable energy (solar power generation), and a method for individually adjusting power of each water electrolysis stack depending on a fluctuation in an amount of power supplied from the renewable energy (solar power generation) and controlling an input current so as to maximize the electrolysis efficiency of a water electrolysis stack.

### Citation List

### Non-patent Literature

NPL 1: Final Report of "Green project" which is one of hydrogen production projects in Europe (https://www.waterstofnet.eu/_asset/_public/Greenports/Gree nports-final-report-Feb-2021.pdf)
NPL 2: IRENA Report "Green Hydrogen cost reduction" (https://www.irena.org/- /media/Files/IRENA/Agency/Publication/2020/Dec/IRENA_Green_ hydrogen_cost_2020.pdf)

### Summary of Invention

### Technical Problem

The development of the novel semiconductor device described in NPL 1 has a problem regarding the time at which the practical use thereof is started, the cost, and ensuring a sufficient production amount. In particular, a new manufacturing process may not be able to meet the demand for 500 GW until 2050, because it takes time to launch the process.

Examples of a method for collectively operating a large number of electrolysis stacks described in NPL 2 include a method for connecting multiple electrolysis stacks in series. Due to the configuration in which multiple electrolysis stacks are connected in series, a voltage can be increased, whereby it is possible to use a typical large-sized direct-current power supply. Therefore, it is expected that a large scale system can be implemented at low cost.

In view of this, an object of the present invention is to provide a water electrolysis system obtained by connecting multiple electrolysis stacks in series and a method for controlling the same.

### Solution to Problem

In order to address the above problem, a water electrolysis system according to the present invention includes: a plurality of electrolysis stacks connected in series to a direct-current power supply; a hydrogen gas tank that stores hydrogen gas generated in the electrolysis stacks; an oxygen gas tank that stores oxygen gas generated in the electrolysis stacks; a hydrogen gas tank pressure control valve that controls the pressure of hydrogen gas generated in all of the plurality of electrolysis stacks; an oxygen gas tank pressure control valve that controls the pressure of oxygen gas generated in all of the plurality of electrolysis stacks; an electrolysis stack hydrogen gas pressure control valve that controls the pressure of hydrogen gas generated in each of the electrolysis stacks; an electrolysis stack oxygen gas pressure control valve that controls the pressure of oxygen gas generated in each of the electrolysis stacks; and a control device that controls opening and closing of the valves.

### Advantageous Effects of Invention

The present invention can provide a water electrolysis system obtained by connecting multiple electrolysis stacks in series and a method for controlling the same.

### Brief Description of Drawings

[FIG. 1] FIG. 1 is a configuration diagram of a water electrolysis system according to the present invention.
[FIG. 2] FIG. 2 is a configuration diagram of a water electrolysis system according to the present invention.
[FIG. 3] FIG. 3 is an image diagram of a change in IV curve due to pressure control of electrolysis stacks in FIG. 3.
[FIG. 4] FIG. 4 is a flowchart of control of pressure adjustment of electrolysis stacks according to the present invention.

### Description of Embodiments

An embodiment of the present invention will be described below with reference to the drawings. Note that the same components are denoted by the same reference numerals, and when the description is repeated, the redundant description may be omitted. In addition, the present invention is not limited to the following embodiment. Different embodiments may be combined.

In general, a water electrolysis device is connected in parallel to a power supply, and controls an output (generated amount of gas) by controlling a current of each water electrolysis device. On the other hand, when multiple stacks are connected in series, currents flowing through all of the stacks connected in series are constant. When the current value is lowered in accordance with stacks having low electrolysis performance or stacks that are seriously degraded, an amount of hydrogen production decreases as a whole. In addition, in a case where the current value is not lowered, the conversion efficiency of these stacks is lowered.

The inventors have found control of operating conditions of electrolysis stacks for producing hydrogen without reducing the electrolysis efficiency as much as possible, even when the performance of each of the electrolysis stacks degrades or the degradation of each of the electrolysis stacks increases.

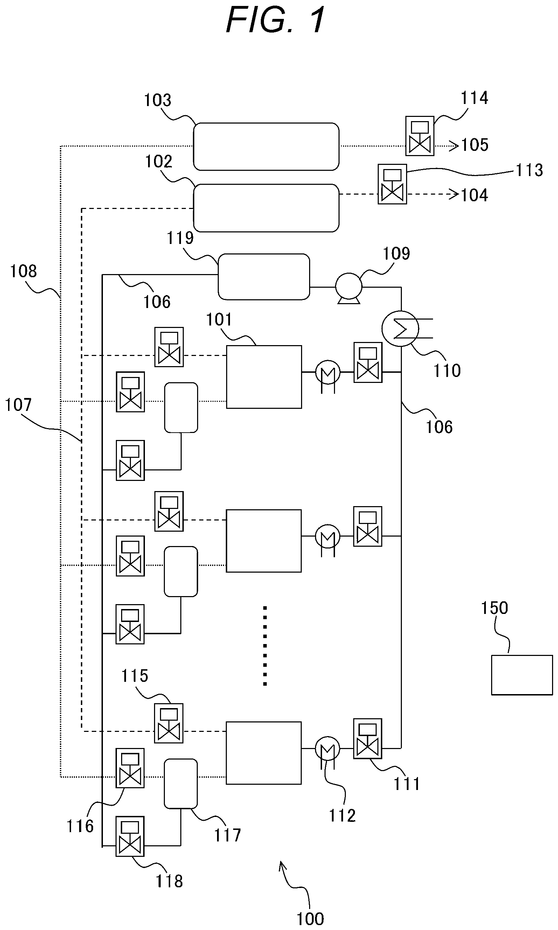

As illustrated in FIG. 1, a water electrolysis system 100 according to the present invention mainly includes electrolysis stacks 101, a hydrogen gas tank 102, an oxygen gas tank 103, a water pipe 106, a hydrogen gas pipe 107, an oxygen gas pipe 108, a water pump 109, a large cooler 110, a water flow control valve 111, a small cooler 112, a hydrogen gas tank pressure control valve 113, an oxygen gas tank pressure control valve 114, electrolysis stack hydrogen gas pressure control valves 115, electrolysis stack oxygen gas pressure control valves 116, oxygen gas/water separation tanks 117, electrolysis stack water pressure control valves 118, and a water tank 119. The water electrolysis system 100 also includes a control device 150.

A hydrogen production process of the water electrolysis system 100 is similar to that of a typical water electrolysis system. Water is supplied from the water tank 119 to the oxygen electrode sides of the individual electrolysis stacks 101 by the water pump 109. A predetermined voltage is applied to the electrolysis stacks 101 to electrolyze water, whereby hydrogen and oxygen are generated. The generated hydrogen is adjusted to a predetermined pressure by the electrolysis stack hydrogen gas pressure control valves 115, passes through the hydrogen gas pipe 107, is collected in the hydrogen gas tank 102, and is adjusted to a predetermined pressure by the hydrogen gas tank pressure control valve 113. Thus, a hydrogen gas 104 is supplied to the outside. The generated oxygen is discharged from the electrolysis stacks 101 together with water that has not been electrolyzed, is separated in the oxygen gas/water separation tanks 117, is adjusted to a predetermined pressure by the electrolysis stack oxygen gas pressure control valves 116, passes through the oxygen gas pipe 108, is collected in the oxygen gas tank 103, and is adjusted to a predetermined pressure by the oxygen gas tank pressure control valve 114. Thus, an oxygen gas 105 is supplied to the outside. Water separated in the oxygen gas/water separation tanks 117 is adjusted to a predetermined pressure by the electrolysis stack water pressure control valves 118, is collected in the water tank 119, and is supplied again to the electrolysis stacks 101 through the water pump. Although a power supply line is not illustrated in FIG. 1, the electrolysis stacks 101 are connected in series so that a typical large direct-current power supply can be applied. The number of stacks connected in series is not particularly limited.

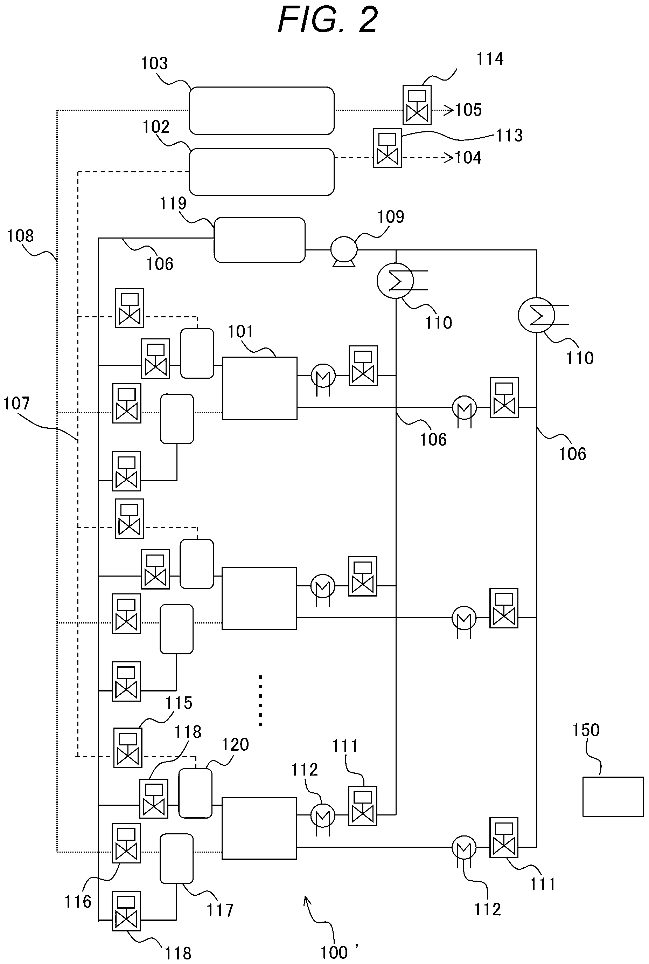

The water electrolysis system 100 illustrated in FIG. 1 is assumed to produce hydrogen gas from protons passing through an electrolyte membrane on the hydrogen electrode side with water being supplied only to the oxygen electrode side. It is not necessary to separate hydrogen from water, and only a half of water supply facilities is needed, by which facility cost can be suppressed. However, only a polymer electrolyte membrane type of a proton permeation type can be applied, which is a problem to be addressed. The water electrolysis system according to the present invention can be applied to any type regardless of the type of electrolyte membranes. A water electrolysis system other than the proton permeation type has two water supply systems, and water is also supplied to the hydrogen electrode side as in a water electrolysis system 100' illustrated in FIG. 2. Generated hydrogen is separated in hydrogen/water separation tanks 120, is adjusted to a predetermined pressure by the electrolysis stack hydrogen gas pressure control valves 115, passes through the hydrogen gas pipe 107, and is collected in the hydrogen gas tank 102. Water separated in the hydrogen gas/water separation tanks 120 is adjusted to a predetermined pressure by the electrolysis stack water pressure control valves 118, is collected in the water tank 119, and is supplied again to the electrolysis stacks 101 through the water pump.

The electrolysis stack hydrogen gas pressure control valves 115 and the electrolysis stack oxygen gas pressure control valves 116 are components specific to the water electrolysis system 100 according to the present invention. The typical electrolysis stacks 101 vary in characteristics and in electrolysis voltage due to degradation, and thus have different electrolysis efficiencies due to a difference in resistance value even if the same current flows therethrough.

In the water electrolysis system 100 according to the present invention, electrolysis voltages of the individual electrolysis stacks are measured, and the pressure of the electrolysis stack having a high electrolysis voltage is reduced by adjusting the electrolysis stack hydrogen gas pressure control valve 115 and the electrolysis stack oxygen gas pressure control valve 116. As a result, the voltage of the electrolysis stack having a high voltage is lowered by decreasing reaction resistance to reduce a difference in voltage between this electrolysis stack and the other electrolysis stacks. Thus, the system can be operated with improved electrolysis efficiency.

The degrees of opening and closing of the electrolysis stack hydrogen gas pressure control valves 115 and the electrolysis stack oxygen gas pressure control valves 116 are constantly monitored so that backflow does not occur due to a pressure difference with other electrolysis stacks, and the system has a control algorithm for controlling the pressures of both the hydrogen gas tank and the oxygen gas tank by controlling the hydrogen gas tank pressure control valve 113 and the oxygen gas tank pressure control valve 114 depending on the monitoring situation.

### <First Embodiment>

This embodiment will describe a pressure control system of the water electrolysis system and a method for controlling the same according to the present invention. Although the present embodiment will be described based on the water electrolysis system 100 illustrated in FIG. 1, the present embodiment can also be applied to the water electrolysis system 100', and is not limited to the configuration illustrated in FIG. 1.

As illustrated in FIG. 1, the water electrolysis system 100 according to the present invention mainly includes the electrolysis stacks 101, the hydrogen gas tank 102, the oxygen gas tank 103, the water pipe 106, the hydrogen gas pipe 107, the oxygen gas pipe, 108, the water pump 109, the large cooler 110, the water flow control valve 111, the small cooler 112, the hydrogen gas tank pressure control valve 113, the oxygen gas tank pressure control valve 114, the electrolysis stack hydrogen gas pressure control valves 115, the electrolysis stack oxygen gas pressure control valves 116, the oxygen gas/water separation tanks 117, the electrolysis stack water pressure control valves 118, and the water tank 119.

In the water electrolysis system 100 according to the present invention, voltages of the individual electrolysis stacks are measured, and the pressure of the electrolysis stack having a high electrolysis voltage is reduced by adjusting the electrolysis stack hydrogen gas pressure control valve 115 and the electrolysis stack oxygen gas pressure control valve 116.

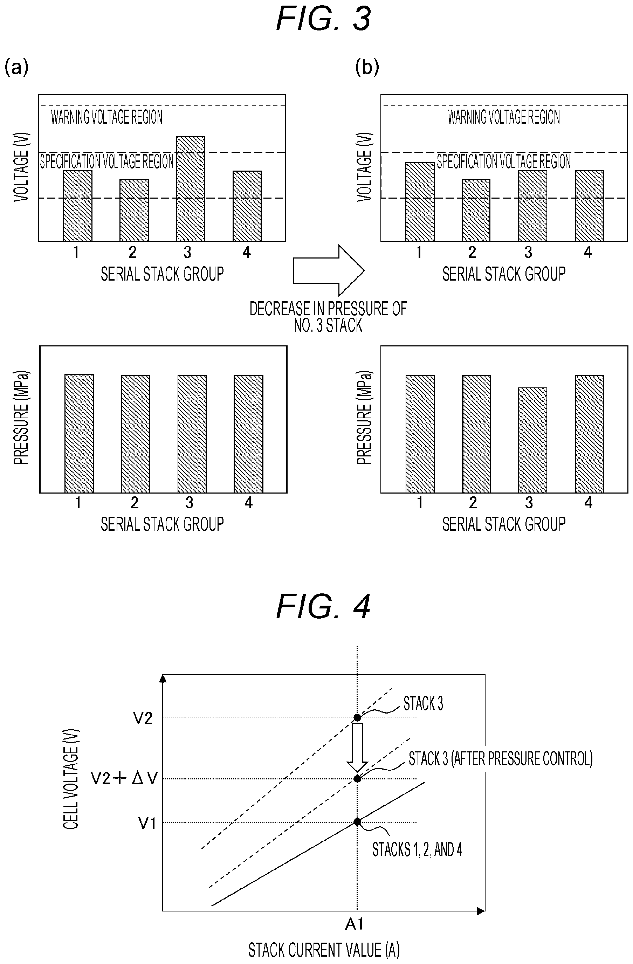

FIG. 3 shows an example of pressure control of an electrolysis stack group. Although FIG. 3 shows a configuration example having electrolysis stacks 1 to 4 (series stack group), FIG. 3 does not indicate the actual number of stacks, and the number of stacks in the water electrolysis system according to the present invention is not limited to that illustrated in FIG. 3.

In operating the water electrolysis system 100 according to the present invention, it is desirable to define a specification voltage region and a warning voltage region of the electrolysis stack 101. The specification voltage region is a voltage region in which hydrogen can be stably produced with high efficiency for a long period of time, and the warning voltage region indicates a voltage region in which performance degradation and breakage of the electrolysis stack are expected when the electrolysis stack is operated for a predetermined time. Since these voltage regions depend on the characteristics of electrolysis stacks, it is necessary to measure the characteristics of the electrolysis stacks to be utilized and set voltage regions for the respective stacks before constructing an actual electrolysis system.

FIG. 3(a) shows voltages during operation of the electrolysis stacks 1 to 4. It can be seen that the electrolysis stacks 1, 2, and 4 are operating in the specification voltage region, while the electrolysis stack 3 is operating at the voltage in the warning voltage region. Therefore, in the present invention, the pressure of hydrogen gas or oxygen gas in the electrolysis stack is reduced by adjusting the electrolysis stack hydrogen gas pressure control valve 115 or the electrolysis stack oxygen gas pressure control valve 116 connected to the electrolysis stack 3. The gas pressures of both gases may be adjusted at the same pressure, or at different pressures as long as the differential pressure between a hydrogen-evolving electrode and an oxygen-evolving electrode is allowable. This makes it possible to adjust the pressure of the hydrogen gas or the oxygen gas of only the electrolysis stack 3. As a result, the voltage of the electrolysis stack 3 can be adjusted to a voltage within a specification voltage region while maintaining the voltages of the electrolysis stacks 1, 2, and 4 as illustrated in FIG. 3(b).

FIG. 4 shows I-V characteristics before and after pressure control of the electrolysis stacks 1 to 4 shown in FIG. 3. Assuming that the value of current supplied to the electrolysis stacks 1 to 4 is A1 amperes and the voltages of the electrolysis stacks 1, 2, and 4 at that time are V1 volts, the electrolysis stack 3 is presumed to be at V2 volt. It is predicted that, due to a high resistance of the electrolysis stack 3, the electrolysis voltage is higher than those of the other electrolysis stacks. Since the current supplied to the electrolysis stacks 1 to 4 is constant at A1, it is presumed that the electrolysis stack 3 with high resistance has a higher temperature than the other electrolysis stacks. The present invention has described an example of pressure control by voltage measurement, but it is preferable to also measure the temperature of individual electrolysis stacks together in order to achieve more accurate pressure control.

Furthermore, the voltage of the electrolysis stack 3 after pressure control is presumed to drop to V2 + ΔV volt. ΔV varies depending on a gas pressure difference before and after pressure control, and is proportional to this pressure difference. Therefore, the water electrolysis system 100 according to the present invention preferably has a calculation algorithm for calculating an electrolysis voltage at a target pressure when pressure control of individual electrolysis stacks is needed in the water electrolysis system 100, and further has a control algorithm for controlling the electrolysis stack hydrogen gas pressure control valve 115 or the electrolysis stack oxygen gas pressure control valve 116 on the basis of the calculated value.

When the electrolysis stack 3 is cooled by the water flow control valve 111 or the small cooler 112, an amount of heat generation decreases due to a decrease in resistance, and the temperature of the electrolysis stack decreases. Therefore, it is necessary to adjust an amount of heat removal by these components. An amount of heat generated from the electrolysis stack is a value obtained by multiplying a current value by an electrolysis overvoltage, that is, a value obtained by subtracting the theoretical electrolysis voltage from the electrolysis voltage. In the electrolysis stack 3, an amount of heat generation decreases from (A1 × (V2 - theoretical electrolysis voltage) to A1 × (V2 + ΔV - theoretical electrolysis voltage) by A1 × ΔV due to pressure control. Therefore, the water electrolysis system 100 according to the present invention preferably has a calculation algorithm for calculating an electrolysis voltage at a target pressure when pressure control of individual electrolysis stacks is needed in the water electrolysis system 100, and further has a control algorithm for controlling the water flow control valve 111 or the small cooler 112 on the basis of the calculated value.

The pressures of the individual electrolysis stacks may be adjusted a plurality of times. By adjusting the pressure in a similar process, the electrolysis stack that has entered a warning pressure region can continue to operate without reducing the voltage efficiency and further without reducing an amount of hydrogen production. It is to be noted, however, that, in general, an electrode of an electrolysis cell is degraded due to oxidation of the electrode when an electrolysis voltage increases to a certain level or more. Therefore, when, for example, the pressure of the electrolysis stack 3 is adjusted a plurality of times, and the value of V2 + ΔV reaches a voltage at which degradation of the electrode cell is presumed, it is necessary to reduce the electrolysis current value to reduce the electrolysis voltage. The water electrolysis system 100 according to the present invention employs multiple electrolysis stacks connected in series, and thus, when the current value is decreased, the overall amount of hydrogen production reduces. Therefore, when the water electrolysis system 100 according to the present invention is used, the water electrolysis system 100 preferably has an algorithm of calculating and comparing the revenue obtained from an amount of hydrogen that can be produced during a predetermined operating period after the current value is lowered and the revenue obtained from an amount of hydrogen that can be produced during a predetermined operating period after the electrolysis stack is replaced at an equipment cost, and has an algorithm of issuing an instruction to stop the water electrolysis system 100 and replace a specific electrolysis stack when the revenue obtained in a case where the electrolysis stack is replaced is high even if the equipment cost is spent.

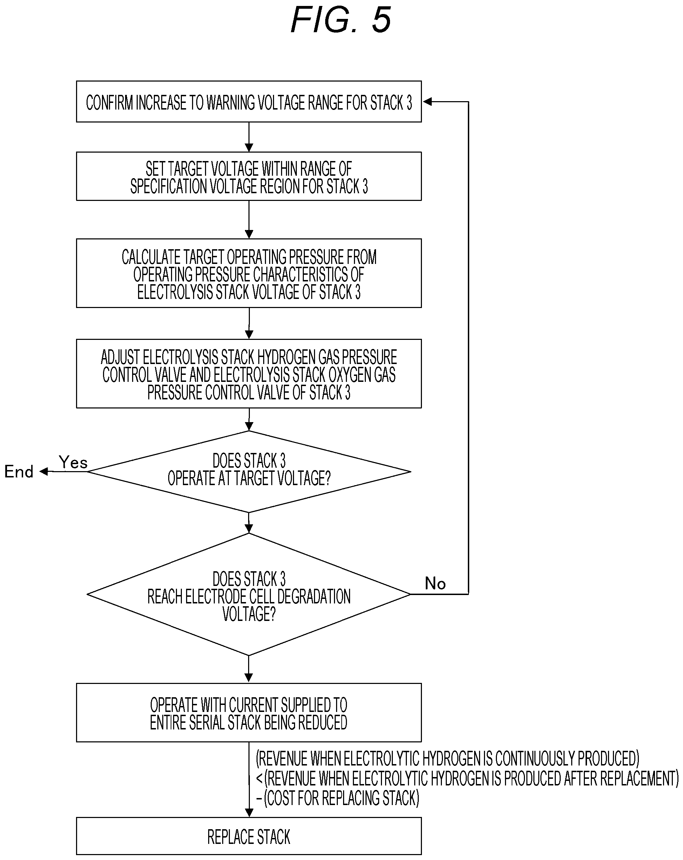

FIG. 5 shows a pressure control process flow of the water electrolysis system 100 according to the present invention. This process flow is created focusing on the electrolysis stack 3 in FIGS. 3 and 4, and may be implemented for a specific electrolysis stack requiring pressure control in an actual flow.

The process flow illustrated in FIG. 5 will be briefly described below.

First, the presence of the electrolysis stack 3 whose electrolysis voltage has increased to the warning voltage region is detected. Thereafter, a target voltage for lowering the electrolysis voltage of the electrolysis stack 3 to the specification voltage region is set. The electrolysis voltage V2 + ΔV volt at the target pressure is calculated on the basis of the electrolysis characteristics (pressure dependence) of the electrolysis stack 3.

In this case, the pressure of the hydrogen gas or the oxygen gas in the electrolysis stack is reduced by adjusting the electrolysis stack hydrogen gas pressure control valve 115 or the electrolysis stack oxygen gas pressure control valve 116 connected to the electrolysis stack 3. The gas pressures of both gases may be adjusted at the same pressure, or at different pressures as long as the differential pressure between a hydrogen-evolving electrode and an oxygen-evolving electrode is allowable.

If the electrolysis stack voltage has reached the specification voltage region after the pressure change, the process is terminated. When the electrolysis stack voltage does not reach the specification voltage region, it is checked whether or not the electrolysis stack voltage reaches the voltage at which degradation of the electrode cell is presumed. When the electrolysis stack voltage does not reach this voltage, the pressure changing process is performed again. When the electrolysis stack voltage reaches a voltage at which degradation of the electrode cell is assumed, it is desirable to reduce the current value of electrolysis.

Further, the revenue obtained from an amount of hydrogen that can be produced during a predetermined operating period after the current value is lowered and the revenue obtained from an amount of hydrogen that can be produced during a predetermined operating period after the electrolysis stack is replaced at an equipment cost are calculated and compared, and when the revenue obtained in a case where the electrolysis stack is replaced is high even if the equipment cost is spent, the water electrolysis system 100 is stopped and a specific electrolysis stack is replaced.

By applying the water electrolysis system 100 and the method for controlling the same according to the first embodiment, it is possible to stably continue hydrogen production with high electrolysis efficiency and low cost in a multi-series electrolysis system capable of utilizing a typical large direct-current power supply.

The above points are summarized as follows. Note that, with respect to matters that are not described above but are described below, the following matters can be applied to the above contents.

The water electrolysis system 100 includes:
a plurality of electrolysis stacks 101 (water electrolysis stacks) connected in series to a direct-current power supply;
a hydrogen gas tank 102 (first tank) that stores a hydrogen gas 104 (hydrogen) generated in the electrolysis stacks 101;
an oxygen gas tank 103 (second tank) that stores an oxygen gas 105 (oxygen) generated in the electrolysis stacks 101;
a hydrogen gas tank pressure control valve 113 (first hydrogen pressure control valve) that controls the pressure of the hydrogen gas 104 generated in all of the plurality of electrolysis stacks 101;
an oxygen gas tank pressure control valve 114 (first oxygen pressure control valve) that controls the pressure of the oxygen gas 105 generated in all of the plurality of electrolysis stacks 101;
an electrolysis stack hydrogen gas pressure control valve 115 (second hydrogen pressure control valve) that controls the pressure of the hydrogen gas 104 generated in each of the electrolysis stacks 101;
an electrolysis stack oxygen gas pressure control valve 116 (second oxygen pressure control valve) that controls the pressure of the oxygen gas 105 generated in each of the electrolysis stacks 101; and
a control device 150 that controls opening and closing of the hydrogen gas tank pressure control valve 113, the oxygen gas tank pressure control valve 114, the electrolysis stack hydrogen gas pressure control valve 115, and the electrolysis stack oxygen gas pressure control valve 116.

Although not illustrated, the control device 150 includes, for example, a central processing unit (CPU), a random access memory (RAM), a read only memory (ROM), and the like. The control device 150 is embodied by loading a predetermined program (control program) stored in the ROM in the RAM and executing the program by the CPU. The program here is for causing a computer to execute a control method. Note that control signal lines and the like between the control device 150 and each of components to be controlled such as the water flow control valve 111 to be controlled are not illustrated.

In addition, in the water electrolysis system 100,
each of the electrolysis stacks 101 includes a voltage measuring instrument (not illustrated), and
the control device 150 has information regarding a specification voltage region (FIG. 3) (specification voltage range) and a warning voltage region (FIG. 3) (warning voltage range), and when the voltage of the electrolysis stack 101 measured by the voltage measuring instrument reaches the warning voltage region, the control device 150 calculates a pressure of the hydrogen gas 104 or a pressure of the oxygen gas 105 to be reduced in order to lower the voltage to the specification voltage region.

In addition, in the water electrolysis system 100,
each of the electrolysis stacks 101 includes a voltage measuring instrument (not illustrated), and
the control device 150 has information regarding a specification voltage region and a warning voltage region, and when the voltage of the electrolysis stack 101 measured by the voltage measuring instrument reaches the warning voltage region, the control device 150 adjusts the opening and closing of the electrolysis stack hydrogen gas pressure control valve 115 or the electrolysis stack oxygen gas pressure control valve 116 corresponding to the electrolysis stack 101 to lower the pressure of the hydrogen gas 104 or the pressure of the oxygen gas 105 of the electrolysis stack 101.

In addition, in the water electrolysis system 100,
each of the electrolysis stacks 101 includes a pressure measuring instrument (not illustrated) that measures a gas pressure of the electrolysis stack 101, and
the control device 150 has information regarding a specification pressure region and a warning pressure region, and when the gas pressure measured by the pressure measuring instrument reaches the warning pressure region, the control device 150 adjusts the opening and closing of the electrolysis stack hydrogen gas pressure control valve 115 or the electrolysis stack oxygen gas pressure control valve 116 corresponding to the electrolysis stack 101 to lower the pressure of the oxygen gas 105 or the pressure of the hydrogen gas 104 of the electrolysis stack 101.

The water electrolysis system 100 further includes:
a temperature measuring instrument (not illustrated) that measures the temperature of each of the electrolysis stacks 101 or the temperature of water discharged from each of the electrolysis stacks 101;
a water pump 109 (liquid feeding device) that supplies water to all of the plurality of electrolysis stacks 101;
a large cooler 110 (first cooler) that regulates the temperature of water supplied to all of the plurality of electrolysis stacks 101;
a water flow control valve 111 (valve) and a small cooler 112 (second cooler) provided in a water pipe 106 (supply pipe) for water between the water pump 109 or the large cooler 110 and the electrolysis stacks 101; and
a control device 150 that controls the water pump 109, the large cooler 110, the small cooler 112, and the water flow control valve 111, wherein,
when the temperature of any of the electrolysis stacks 101 changes, the control device 150 opens the water flow control valve 111 corresponding to the electrolysis stack 101 or cools water supplied to the electrolysis stack 101 with the small cooler 112 corresponding to the electrolysis stack 101.

A method for controlling the water electrolysis system 100 includes:
setting a specification voltage region and a warning voltage region in advance from electrolysis characteristics of each of the electrolysis stacks 101;
measuring a voltage of each of the electrolysis stacks 101; and
adjusting, when the measured voltage reaches the warning voltage region, opening and closing of the electrolysis stack hydrogen gas pressure control valve 115 or the electrolysis stack oxygen gas pressure control valve 116 corresponding to the electrolysis stack 101 to lower the pressure of the oxygen gas 105 or the pressure of the hydrogen gas 104 of the electrolysis stack 101.

The method for controlling the water electrolysis system 100 further includes
calculating, when the measured voltage reaches the warning voltage region, a pressure of the hydrogen gas 104 or a pressure of the oxygen gas 105 to be reduced in order to reduce the voltage to the specification voltage region.

The method for controlling the water electrolysis system 100 further includes
decreasing current values of all of a plurality of the water electrolysis systems 100 when the voltage of each of the electrolysis stacks 101 reaches the warning voltage region and the voltage does not lower to the specification voltage region even by adjusting opening and closing of the electrolysis stack hydrogen gas pressure control valve 115 or the electrolysis stack oxygen gas pressure control valve 116 corresponding to the electrolysis stack 101.

The method for controlling the water electrolysis system 100 further includes:
setting a specification pressure region and a warning pressure region in advance from electrolysis characteristics of each of the electrolysis stacks 101;
measuring a gas pressure of each of the electrolysis stacks 101; and
adjusting, when the measured pressure reaches the warning pressure region, opening and closing of the electrolysis stack hydrogen gas pressure control valve 115 or the electrolysis stack oxygen gas pressure control valve 116 corresponding to the electrolysis stack 101 to lower the gas pressure of the electrolysis stack 101.

The method for controlling the water electrolysis system 100 further includes:
measuring a degree of opening and closing of the electrolysis stack hydrogen gas pressure control valve 115 or the electrolysis stack oxygen gas pressure control valve 116;
measuring a gas pressure of each of the electrolysis stacks 101; and
controlling the hydrogen gas tank pressure control valve 113 and the oxygen gas tank pressure control valve 114 depending on the measured degree of opening and closing of the electrolysis stack hydrogen gas pressure control valve 115 or the electrolysis stack oxygen gas pressure control valve 116 and the gas pressure of the electrolysis stack 101 so that backflow of generated hydrogen gas 104 and oxygen gas 105 does not occur in each of the electrolysis stacks 101.

The method for controlling the water electrolysis system 100 further includes:
measuring a temperature of each of the electrolysis stacks 101; and
adjusting an amount of water to be supplied to each of the electrolysis stacks 101 or a temperature of water to be supplied to each of the electrolysis stacks 101 when the temperature of each of the electrolysis stacks 101 is changed due to a change in gas pressure of the electrolysis stack 101.

### Reference Signs List

100 water electrolysis system (water electrolysis system) according to the present invention
101 electrolysis stack (water electrolysis stack)
102 hydrogen gas tank (first tank)
103 oxygen gas tank (second tank)
104 hydrogen gas
105 oxygen gas
106 water pipe
107 hydrogen gas pipe
108 oxygen gas pipe
109 water pump
110 large cooler
111 water flow control valve
112 small cooler
113 hydrogen gas tank pressure control valve (first hydrogen pressure control valve)
114 oxygen gas tank pressure control valve (first oxygen pressure control valve)
115 electrolysis stack hydrogen gas pressure control valve (second hydrogen pressure control valve)
116 electrolysis stack oxygen gas pressure control valve (second oxygen pressure control valve)
117 oxygen gas/water separation tank
118 electrolysis stack water pressure control valve
119 water tank
120 hydrogen gas/water separation tank
150 control device

## Claims

1. A water electrolysis system comprising:
a plurality of water electrolysis stacks connected in series to a direct-current power supply;
a first tank that stores hydrogen generated in the water electrolysis stacks;
a second tank that stores oxygen generated in the water electrolysis stacks;
a first hydrogen pressure control valve that controls a pressure of hydrogen generated in all of the plurality of water electrolysis stacks;
a first oxygen pressure control valve that controls a pressure of oxygen generated in all of the plurality of water electrolysis stacks;
a second hydrogen pressure control valve that controls a pressure of hydrogen generated in each of the water electrolysis stacks;
a second oxygen pressure control valve that controls a pressure of oxygen generated in each of the water electrolysis stacks; and
a control device that controls opening and closing of the first hydrogen pressure control valve, the first oxygen pressure control valve, the second hydrogen pressure control valve, and the second oxygen pressure control valve.

2. The water electrolysis system according to claim 1, wherein
each of the water electrolysis stacks includes a voltage measuring instrument, and
the control device has information regarding a specification voltage range and a warning voltage range, and when a voltage of the water electrolysis stack measured by the voltage measuring instrument reaches the warning voltage range, the control device calculates a hydrogen gas pressure or an oxygen gas pressure to be reduced in order to lower the voltage to the specification voltage range.

3. The water electrolysis system according to claim 1 or 2, wherein
each of the water electrolysis stacks includes a voltage measuring instrument, and
the control device has information regarding a specification voltage range and a warning voltage range, and when a voltage of the water electrolysis stack measured by the voltage measuring instrument reaches the warning voltage range, the control device adjusts opening and closing of the second hydrogen pressure control valve or the second oxygen pressure control valve corresponding to the water electrolysis stack to lower the pressure of oxygen or hydrogen of the water electrolysis stack.

4. The water electrolysis system according to claim 1, wherein
each of the water electrolysis stacks includes a pressure measuring instrument that measures a gas pressure of the water electrolysis stack, and
the control device has information regarding a specification pressure range and a warning pressure range, and when a gas pressure measured by the pressure measuring instrument reaches the warning pressure range, the control device adjusts opening and closing of the second hydrogen pressure control valve or the second oxygen pressure control valve corresponding to the water electrolysis stack to lower the pressure of oxygen or hydrogen of the water electrolysis stack.

5. The water electrolysis system according to any one of claims 1 to 4 further comprising:
a temperature measuring instrument that measures a temperature of each of the water electrolysis stacks or a temperature of water discharged from each of the water electrolysis stacks;
a liquid feeding device that supplies water to all of the plurality of water electrolysis stacks;
a first cooler that regulates a temperature of water supplied to all of the plurality of water electrolysis stacks;
a valve and a second cooler provided in a water supply pipe between the liquid feeding device or the first cooler and the water electrolysis stacks; and
a control device that controls the liquid feeding device, the first cooler, the second cooler, and the valve, wherein
when the temperature of any of the water electrolysis stacks changes, the control device opens the valve corresponding to the water electrolysis stack or cools water supplied to the water electrolysis stack with the second cooler corresponding to the water electrolysis stack.

6. A method for controlling the water electrolysis system according to claim 1, the method comprising:
setting a specification voltage range and a warning voltage range from an electrolysis characteristic of each of the water electrolysis stacks;
measuring a voltage of each of the water electrolysis stacks; and
adjusting, when a measured voltage reaches the warning voltage range, opening and closing of the second hydrogen pressure control valve or the second oxygen pressure control valve corresponding to the water electrolysis stack to lower the pressure of oxygen or hydrogen of the water electrolysis stack.

7. The method for controlling the water electrolysis system according to claim 6, the method further comprising
calculating, when the measured voltage reaches the warning voltage range, a hydrogen gas pressure or an oxygen gas pressure to be reduced in order to lower the voltage to the specification voltage range.

8. The method for controlling the water electrolysis system according to claim 6 or 7, the method further comprising
decreasing current values of all of a plurality of the water electrolysis systems when the voltage of each of the water electrolysis stacks reaches the warning voltage range and the voltage does not lower to the specification voltage range even by adjusting opening and closing of the second hydrogen pressure control valve or the second oxygen pressure control valve corresponding to the water electrolysis stack.

9. A method for controlling the water electrolysis system according to claim 1, the method comprising:
setting a specification pressure range and a warning pressure range from an electrolysis characteristic of each of the water electrolysis stacks;
measuring a gas pressure of each of the water electrolysis stacks; and
adjusting, when a measured pressure reaches the warning pressure range, opening and closing of the second hydrogen pressure control valve or the second oxygen pressure control valve corresponding to the water electrolysis stack to lower the gas pressure of the water electrolysis stack.

10. The method for controlling the water electrolysis system according to any one of claims 6 to 9, the method further comprising:
measuring degrees of opening and closing of the second hydrogen pressure control valve and the second oxygen pressure control valve;
measuring a gas pressure of each of the water electrolysis stacks; and
controlling the first hydrogen pressure control valve and the first oxygen pressure control valve depending on the measured degrees of opening and closing of the second hydrogen pressure control valve and the second oxygen pressure control valve and the gas pressure of the water electrolysis stack so that backflow of generated hydrogen and oxygen does not occur in each of the water electrolysis stacks.

11. The method for controlling the water electrolysis system according to any one of claims 6 to 9, the method further comprising:
measuring a temperature of each of the water electrolysis stacks; and
adjusting an amount of water to be supplied to each of the water electrolysis stacks or a temperature of water to be supplied to each of the water electrolysis stacks when the temperature of each of the water electrolysis stacks is changed due to a change in a gas pressure of the water electrolysis stack.
